# EUROPEAN PATENT APPLICATION

(11) **EP 4 648 218 A1**
(43) Date of publication of application: **12.11.2025**
(21) Application number: 23914797.8
(22) Date of filing: 26.12.2023
(51) Int. Cl.: H01Q 1/12, H01Q 9/16

(54) **TRANSMITTER, TRANSMITTER GROUP, AND SYSTEM**

(30) Priority: 06.01.2023 JP 2023000955
(71) Applicant: Aeterlink Corp., Tokyo 100-0005 (JP)
(72) Inventor: KUMAGAI, Ryosuke, Tokyo 100-0005 (JP); TANABE, Yuji, Tokyo 100-0005 (JP)
(74) Representative: Zimmermann & Partner Patentanwälte mbB
(86) International application number: PCT/JP2023/046534
(87) International publication number: WO 2024/147311

(57) **Abstract**

This transmitter comprises: a housing which has a long side and a short side and in which the width of the short side is substantially the same as the width of a duct rail; an attachment part which is for attaching the housing to the duct rail with the extension direction of the duct rail and the long side substantially aligned; and an antenna element which is housed within the housing.

## Description

### TECHNICAL FIELD

The present disclosure relates to a transmitter, a transmitter group, and a system.

### BACKGROUND ART

Patent Literature 1 describes installation of an antenna that reduces delayed waves of radio waves emitted from an antenna in an enclosed space, and improves a communication environment within the enclosed space.

### CITATION LIST

### PATENT LITERATURE

Patent Literature 1: JP2003-324377A

### SUMMARY OF INVENTION

### TECHNICAL PROBLEM

In Patent Literature 1, a directional antenna group is formed by arranging directional antennas along a longitudinal direction of a vehicle. In Patent Literature 1, a directional antenna is provided with directivity to face a window frame direction, thereby reducing multiple reflected waves and delayed waves in the vehicle and improving a wireless environment.

However, Patent Literature 1 describes that the wireless environment in the vehicle is improved, but does not describe wireless power transfer (WPT) indoors.

An object of the present disclosure is to provide a technique for realizing wireless power transfer indoors.

### SOLUTION TO PROBLEM

A transmitter including: a housing having a longitudinal direction and a lateral direction, a width of the housing in the lateral direction being substantially the same as a width of a duct rail; an attachment portion for attaching the housing to the duct rail such that an extension direction of the duct rail substantially coincides with the longitudinal direction of the housing; and an antenna element housed in the housing.

### ADVANTAGEOUS EFFECTS OF INVENTION

According to the present disclosure, it is possible to provide a technique for realizing wireless power transfer indoors.

### BRIEF DESCRIPTION OF DRAWINGS

[FIG. 1] FIG. 1 illustrates an overall configuration of a WPT system 1 according to the present embodiment.
[FIG. 2] FIG. 2 is a block diagram illustrating a configuration example of a transmitter 100 and a receiver 200 illustrated in FIG. 1.
[FIG. 3] FIG. 3 is a schematic diagram illustrating a configuration of the transmitter 100 installed indoors.
[FIG. 4] FIG. 4 is a schematic diagram illustrating the transmitter 100 when attached to a duct rail.
[FIG. 5] FIG. 5 is a schematic diagram illustrating a configuration of a lid 106 and a housing 107.
[FIG. 6] FIG. 6 is a schematic diagram of the lid 106 when viewed from the housing 107 side.
[FIG. 7] FIG. 7 is a cross-sectional view of the lid 106 taken along a broken line illustrated in FIG. 6.
[FIG. 8] FIG. 8 is a schematic diagram of the housing 107 when viewed from the lid 106 side.
[FIG. 9] FIG. 9 is a cross-sectional view of the housing 107 taken along a broken line illustrated in FIG. 8.
[FIG. 10] FIG. 10 is a schematic diagram of the housing 107 of a transmitter 100-2 when viewed from the lid 106 side.
[FIG. 11] FIG. 11 is a schematic diagram illustrating the transmitter 100-1 and a transmitter 100-2 when attached to the duct rail.
[FIG. 12] FIG. 12 is a schematic diagram of the housing 107 when viewed from the lid 106 side.
[FIG. 13] FIG. 13 is a cross-sectional view of the housing 107 taken along a broken line illustrated in FIG. 12.
[FIG. 14] FIG. 14 is a schematic diagram of the housing 107 when viewed obliquely from the lid 106 side.
[FIG. 15] FIG. 15 is a schematic diagram of the housing 107 of a transmitter 100-4 when viewed obliquely from the lid 106 side.
[FIG. 16] FIG. 16 illustrates a simulation result of a reception level of a signal received by a reception antenna when a radio wave is transmitted while changing an angle of an antenna element housed in a transmitter.
[FIG. 17] FIG. 17 is a block diagram illustrating a basic hardware configuration of a computer 90.

### DESCRIPTION OF EMBODIMENTS

Hereinafter, embodiments of the present invention will be described with reference to the drawings. In the following description, the same components are denoted by the same reference numerals. Names and functions thereof are also the same. Therefore, detailed descriptions thereof will not be repeated.

### <Outline>

A transmitter according to the present embodiment is used in a WPT system. The transmitter is attached to, for example, a duct rail provided on an indoor ceiling. The transmitter has an antenna element and is configured to transmit electromagnetic waves in a 920 MHz band as a feed signal from the antenna element.

### <1 Overall System Configuration Diagram>

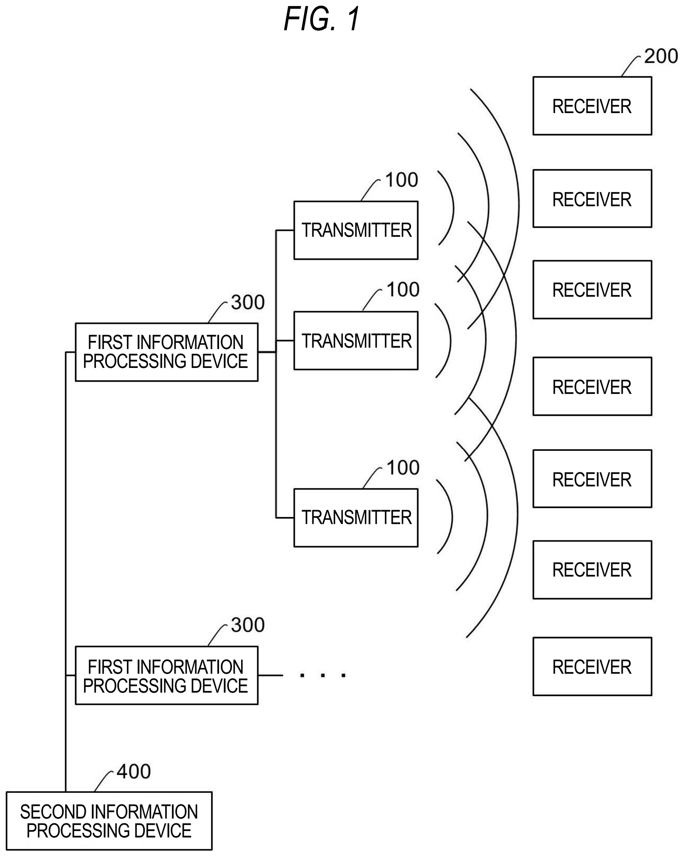

FIG. 1 illustrates an overall configuration of a WPT system 1 according to the present embodiment.

The WPT system 1 illustrated in FIG. 1 includes, for example, a transmitter 100, a receiver 200, a first information processing device 300, and a second information processing device 400. The WPT system 1 illustrated in FIG. 1 is used in, for example, a building or a factory. The connection between the transmitter 100 and the first information processing device 300, and the connection between the first information processing device 300 and the second information processing device 400 may be wired or wireless.

FIG. 1 illustrates an example in which the WPT system 1 includes three transmitters 100, but the number of transmitters 100 included in the WPT system 1 is not limited to three. The number of transmitters 100 included in the WPT system 1 may be two or less, or four or more.

FIG. 1 illustrates an example in which the WPT system 1 includes seven receivers 200, but the number of receivers 200 included in the WPT system 1 is not limited to seven. The number of receivers 200 included in the WPT system 1 may be six or less, or eight or more.

FIG. 1 illustrates an example in which the WPT system 1 includes two first information processing devices 300, but the number of first information processing devices 300 included in the WPT system 1 is not limited to two. The number of first information processing devices 300 included in the WPT system 1 may be one or three or more.

The transmitter 100 is configured to transmit, for example, a feed signal or a data signal to the receiver 200. The transmitter 100 is configured to transmit a feed signal to the receiver 200, using radio waves in the 920 MHz band, for example. The transmitter 100 is configured to transmit a data signal to the receiver 200, using radio waves in a 2.4 GHz band, for example. The transmitter 100 may be configured to transmit the data signal, using radio waves in the 920 MHz band.

For example, the transmitter 100 may be configured to transmit the feed signal to one receiver 200, or may be configured to transmit the feed signal to a plurality of receivers 200. For example, the transmitter 100 may be configured to transmit the data signal to one receiver 200, or may be configured to transmit the data signal to a plurality of receivers 200. For example, the transmitter 100 may be configured to transmit the same data signal as other transmitters 100, or may be configured to transmit a different data signal from other transmitters 100. For example, the transmitter 100 may be configured to transmit a predetermined command signal as the data signal to the receiver 200, or may be configured to transmit a preset signal as the data signal to the receiver 200.

The transmitter 100 is configured to receive, for example, a data signal transmitted from the receiver 200. For example, the transmitter 100 may be configured to receive a data signal transmitted from one receiver 200, or may be configured to receive data signals transmitted from a plurality of receivers 200. The transmitter 100 is configured to transmit the data signal transmitted from the receiver 200 to the first information processing device 300. The transmitter 100 is configured to transmit information on a state of the transmitter 100 to the first information processing device 300.

The receiver 200 is configured to receive, for example, a feed signal or a data signal transmitted from the transmitter 100. For example, in a case where the receiver 200 includes a battery, the receiver 200 is configured to convert the feed signal transmitted from the transmitter 100 into power and store the converted power in the battery. For example, in a case where the receiver 200 includes a predetermined sensor, the receiver 200 is configured to convert the feed signal transmitted from the transmitter 100 into power and drive the sensor with the converted power.

The receiver 200 is configured to transmit, for example, information on a state of the receiver 200 or information on a measurement result by a sensor to the transmitter 100 as the data signal.

The first information processing device 300 is an information processing device configured to monitor operations of the transmitter 100 and the receiver 200 accommodated in the WPT system 1. For example, the first information processing device 300 is configured to determine whether the transmitter 100 or the receiver 200 is in a preset state, based on the information on the states of the transmitter 100 and the receiver 200 transmitted from the transmitter 100. When it is determined that the transmitter 100 or the receiver 200 is in the preset state, the first information processing device 300 transmits predetermined information to the second information processing device 400.

The first information processing device 300 is configured to accumulate information on the transmitter 100 and the receiver 200 accommodated in the WPT system 1. For example, the first information processing device 300 is configured to store, in a storage unit provided in the first information processing device 300, the information on the states of the transmitter 100 and the receiver 200 transmitted from the transmitter 100.

The first information processing device 300 is configured to control the operation of the transmitter 100 accommodated in the WPT system 1.

The second information processing device 400 is an information processing device configured to be operated by an administrator of the WPT system 1. In a case where the second information processing device 400 receives, from the first information processing device 300, a notification indicating that the transmitter 100 and/or the receiver 200 accommodated in the WPT system 1 are/is in a predetermined state, the second information processing device 400 presents to the user that the transmitter 100 and/or the receiver 200 are/is in the predetermined state.

Further, the second information processing device 400 is configured to analyze the information on the states of the transmitter 100 and the receiver 200 stored in the first information processing device 300, and present predetermined information to the user. The predetermined information is, for example, as follows.
·Information on arrangement of the transmitter 100
·Information on arrangement of the receiver 200
·Information on power consumption
·Information on power intensity

### <1.1 Configurations of Transmitter and Receiver>

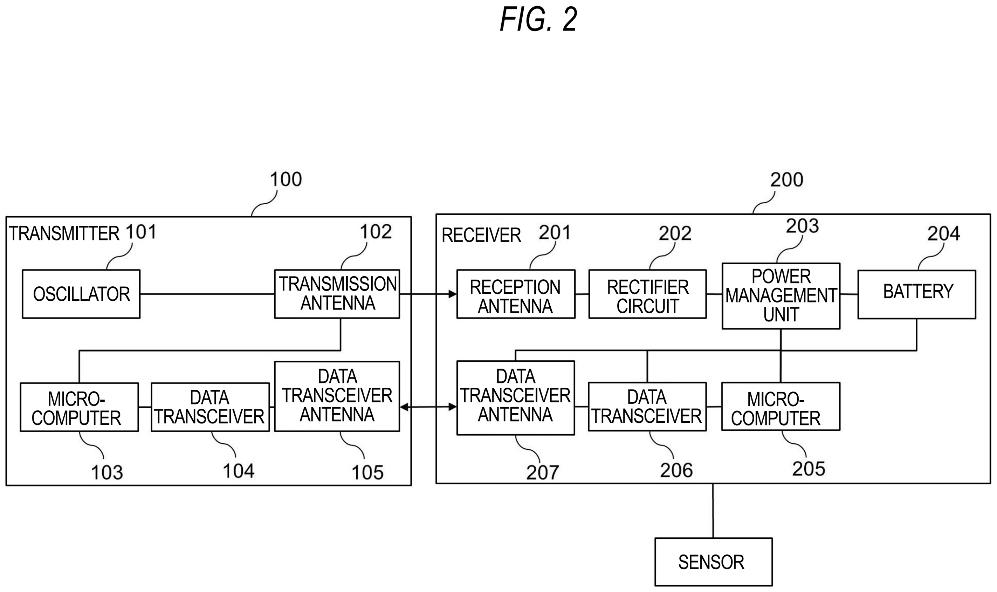

FIG. 2 is a block diagram illustrating a configuration example of the transmitter 100 and the receiver 200 illustrated in FIG. 1. As illustrated in FIG. 2, the transmitter 100 and the receiver 200 are separated from each other at a predetermined interval, for example. For example, the transmitter 100 and the receiver 200 are installed a few meters apart. Specifically, for example, the transmitter 100 is fixedly installed at a predetermined high position indoors, for example, on a ceiling or a wall. The receiver 200 is installed in a predetermined indoor device or placed near a device that requires power. Further, the receiver 200 may be carried by a user. The transmitter 100 is configured to transmit a feed signal to the receiver 200, using radio waves of a predetermined frequency, for example, in the 920 MHz band. The receiver 200 is configured to convert the feed signal transmitted from the transmitter 100 into power, and use the converted power for charging or supplies the converted power to a predetermined device.

The transmitter 100 includes, for example, an oscillator 101, a transmission antenna 102, a microcomputer (controller) 103, a data transceiver 104, and a data transceiver antenna 105. The oscillator 101, the microcomputer 103, the data transceiver 104, and the data transceiver antenna 105 may be mounted on, for example, a printed circuit board (PCB).

The oscillator 101 is configured to oscillate a signal in a predetermined frequency band, for example, a 920 MHz band. The oscillated signal may be amplified as necessary to remove unnecessary frequency components.

The transmission antenna 102 is configured to efficiently transmit radio waves in the 920 MHz band, for example. The transmission antenna 102 is configured to radiate, as a feed signal, the signal oscillated by the oscillator 101.

The microcomputer 103 is configured to control the operation of the transmitter 100. The microcomputer 103 is implemented by, for example, a single-board computer equipped with an ARM processor. The microcomputer 103 is configured to control, for example, transmission of radio waves from the transmission antenna 102.

The data transceiver 104 is configured to perform processing such as converting digital data into analog data and modulating the analog data. The data transceiver 104 is configured to perform processing such as demodulating a signal extracted from data signals received by the data transceiver antenna 105 and converting the demodulated analog data into digital data. For example, the data transceiver 104 is configured to extract a predetermined signal from the data signals received by the data transceiver antenna 105, convert the signal into digital data, and transmit the digital data to the microcomputer 103.

The data transceiver antenna 105 is configured to efficiently transmit and receive radio waves in the 2.4 GHz band, for example. The data transceiver antenna 105 is configured to radiate a data signal supplied from the data transceiver 104. The data transceiver antenna 105 is configured to receive a data signal transmitted from the receiver 200.

The receiver 200 includes, for example, a reception antenna 201, a rectifier 202, a power management unit 203, a battery 204, a microcomputer 205, a data transceiver 206, and a data transceiver antenna 207. The reception antenna 201, the rectifier 202, the power management unit 203, the battery 204, the microcomputer 205, the data transceiver 206, and the data transceiver antenna 207 may be mounted on, for example, a PCB or a flexible printed circuit (FPC).

The reception antenna 201 is configured to efficiently receive radio waves in the 920 MHz band, for example. The reception antenna 201 is configured to receive the feed signal radiated from the transmission antenna 102.

The rectifier 202 is configured to rectify a radio wave received as the feed signal and convert the radio wave into a DC voltage.

The power management unit 203 is configured to manage the DC voltage. For example, the power management unit 203 is configured to control a charging voltage based on the DC voltage. The power management unit 203 is configured to control the charging voltage to charge the battery 204. In addition, for example, in a case where power of a predetermined capacity or more is stored in the battery 204, the power management unit 203 supplies the DC voltage to a connected member.

The power management unit 203 is configured to discharge the power stored in the battery 204 under the control of the microcomputer 205.

The battery 204 is configured to store power according to an instruction from the power management unit 203. The battery 204 is configured to discharge the power stored according to the instruction from the power management unit 203.

The microcomputer 205 is configured to control the operation of the receiver 200. The microcomputer 205 is driven by the DC voltage supplied from the power management unit 203 or the power stored in the battery 204. The microcomputer 205 is configured to control the power management unit 203 to discharge the power stored in the battery 204.

For example, various sensors can be connected to the receiver 200. For example, a thermal sensor, a temperature sensor, an optical sensor, a humidity sensor, a vibration sensor, and the like are connected to the receiver 200. The sensors connected to the receiver 200 are driven by, for example, the DC voltage supplied from the power management unit 203 or the power discharged from the battery 204. The microcomputer 205 is configured to continuously or intermittently monitor a voltage value at a predetermined portion of the receiver 200, a state of a sensor connected to the receiver 200, information detected by the sensor, and the like. The microcomputer 205 is configured to transmit to, the data transceiver 206, as digital data, the voltage value at the predetermined portion of the receiver 200, the state of the sensor connected to the receiver 200, the information detected by the sensor, and the like. The sensor may be built into the receiver 200.

The data transceiver 206 is configured to perform processing such as converting the digital data supplied from the microcomputer 205 into analog data and modulating the analog data. The data transceiver 206 is configured to perform processing such as demodulating the analog data and converting the demodulated analog data into digital data. The data transceiver 206 is driven by, for example, the DC voltage supplied from the power management unit 203 or the power discharged from the battery 204.

The data transceiver antenna 207 is configured to efficiently transmit and receive radio waves in the 2.4 GHz band, for example. The data transceiver antenna 207 is configured to radiate a data signal supplied from the data transceiver 206. The data transceiver antenna 207 is configured to receive the data signal transmitted from the transmitter 100. For example, the data transceiver antenna 207 is driven by the DC voltage supplied from the power management unit 203 or the power discharged from the battery 204.

### <1.2 Configuration of Transmitter>

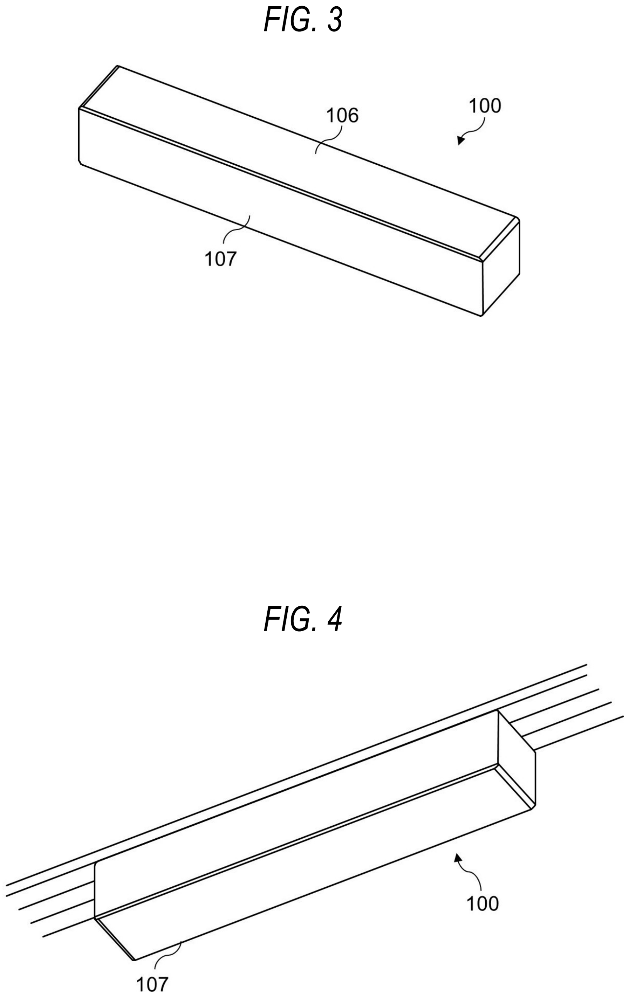

FIG. 3 is a schematic diagram illustrating a configuration of the transmitter 100 installed indoors. The transmitter 100 illustrated in FIG. 3 has a substantially rectangular parallelepiped shape. In the present embodiment, the transmitter 100 is attached to, for example, a duct rail. In a structure such as a building, a size of the duct rail conforms to, for example, a preset standard. For example, the duct rail conforms to a predetermined lighting duct standard.

The transmitter 100 includes a lid 106 and a housing 107. In the transmitter 100, the lid 106 is attached to the duct rail. The lid 106 is provided with an attachment portion for attaching the transmitter 100 to the duct rail such that an extension direction of the duct rail substantially coincides with a longitudinal direction of the housing 107. The shape of the attachment portion is not limited, and thus is not illustrated in FIG. 3.

FIG. 4 is a schematic diagram illustrating the transmitter 100 when attached to the duct rail. The transmitter 100 is attached to the duct rail by the lid 106, with the housing 107 facing a floor surface.

The transmitter 100 has a longitudinal direction and a lateral direction. The longitudinal direction coincides with the extension direction of the duct rail. A length of the transmitter 100 in the longitudinal direction is sufficient to accommodate the antenna element (transmission antenna 102) inside the housing 107. In addition, the length of the transmitter 100 in the longitudinal direction is sufficient to accommodate a PCB in which the oscillator 101, the microcomputer 103, and the data transceiver 104 are mounted inside the housing 107. Specifically, the length of the transmitter 100 in the longitudinal direction is, for example, 210 mm.

The lateral direction coincides with a width direction of the duct rail. A length of the transmitter 100 in the lateral direction is substantially the same as a width of the duct rail. Specifically, the length of the transmitter 100 in the lateral direction is, for example, 32.6 mm. A length from a top surface of the lid 106 to a bottom surface of the housing 107 is, for example, 34 mm.

The transmitter 100 has a shape corresponding to the duct rail. For example, the length of the transmitter 100 in the lateral direction substantially coincides the width of the duct rail. This prevents the transmitter 100 from protruding from the duct rail when the transmitter 100 is attached to the duct rail. Therefore, even when the transmitter 100 is attached to the duct rail, an appearance of the ceiling is not impaired.

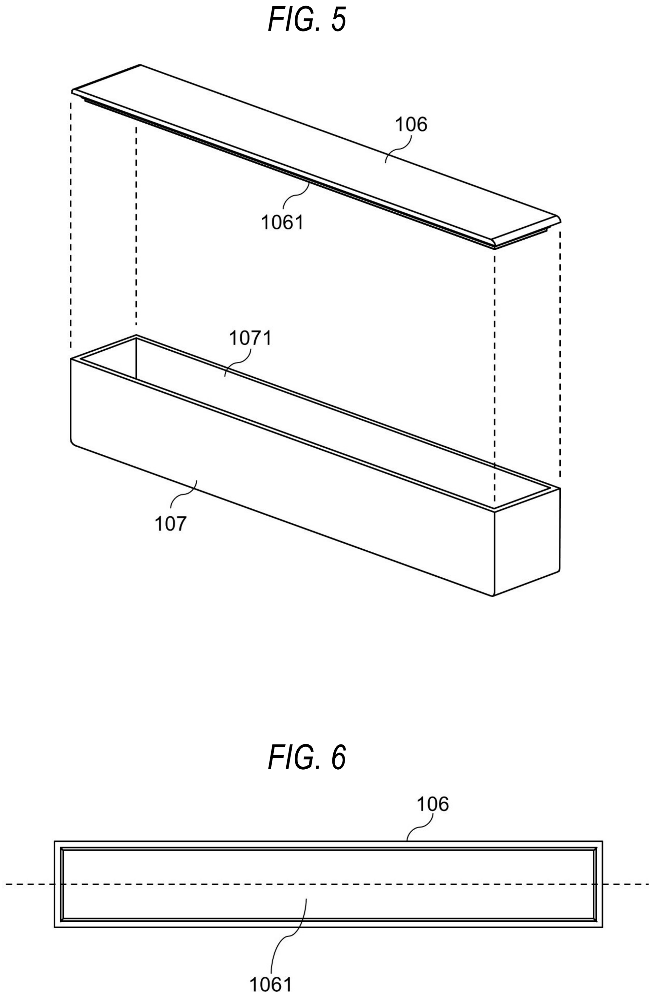

FIG. 5 is a schematic diagram illustrating a configuration of the lid 106 and the housing 107. The lid 106 is attached to the housing 107 to close an opening 1071 of the housing 107. For example, the lid 106 is fitted and fixed into the opening 1071 of the housing 107. The lid 106 may be fixed to the opening 1071 of the housing 107 by a predetermined bonding means. The lid 106 and the housing 107 are made of, for example, resin or metal.

FIG. 6 is a schematic diagram of the lid 106 when viewed from the housing 107 side.

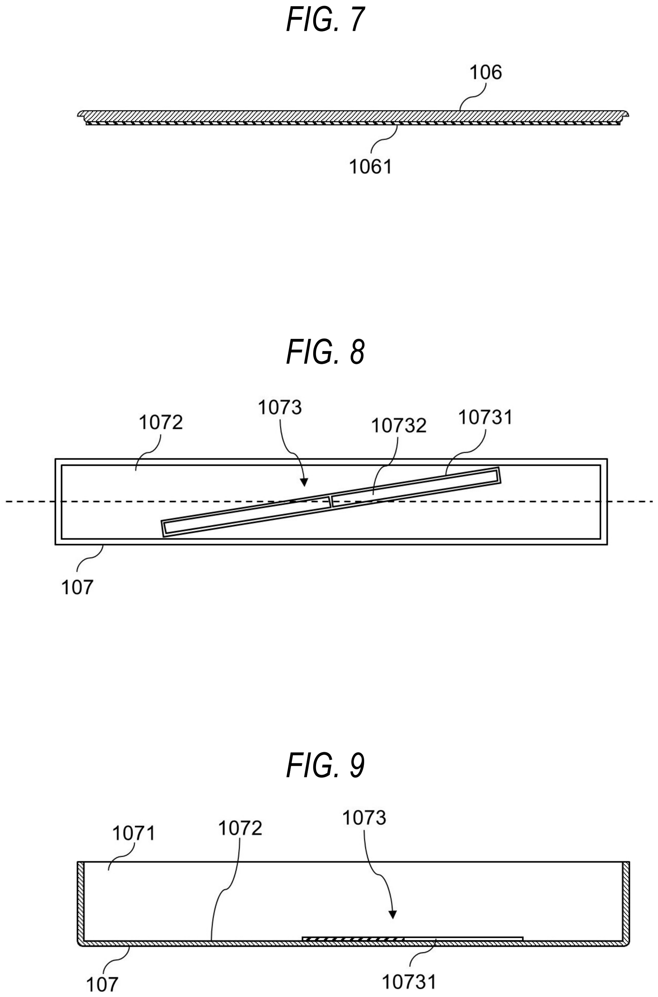

FIG. 7 is a cross-sectional view of the lid 106 taken along a broken line illustrated in FIG. 6.

A PCB 1061 is attached to a surface of the lid 106 on the housing 107 side. The PCB 1061 has a size equal to or larger than a size of the antenna element. That is, a metal plate is attached to the surface of the lid 106 on the housing 107 side away from the antenna element. The PCB 1061 serves as a reflector.

### (Configuration Example 1 of Antenna Element)

An antenna element 1073 is housed inside the housing 107. The antenna element 1073 is, for example, a linearly polarized antenna. The antenna element 1073 is implemented by, for example, a dipole antenna. Since the transmitter 100 is configured to radiate the electromagnetic wave in the 920 MHz band, a length of the antenna element 1073 is a length (about λ/2 = 160 mm) corresponding to a wavelength of the electromagnetic wave in the 920 MHz band. The antenna element 1073 is housed in the housing in a state where the antenna element 1073 is inclined by a predetermined angle in a horizontal direction with respect to a longitudinal direction of the housing 107, which is, the extension direction of the duct rail.

FIG. 8 is a schematic diagram of the housing 107 when viewed from the lid 106 side.

FIG. 9 is a cross-sectional view of the housing 107 taken along a broken line illustrated in FIG. 8.

As illustrated in FIGs. 8 and 9, the antenna element 1073 is formed on a bottom portion 1072 of the housing 107. In FIG. 8, the antenna element 1073 has a linear shape. The antenna element 1073 has a feed point at the center thereof, and two conductive wires extend from the feed point in opposite directions. FIG. 8 illustrates a case where a metal foil (copper foil) 10732 is formed on a substrate 10731. However, the configuration of the antenna element 1073 is not limited thereto. The antenna element 1073 may be a metal rod, a metal plate, or a metal foil.

The antenna element 1073 is inclined at a predetermined angle in the horizontal direction with respect to the longitudinal direction of the housing 107. The length of the antenna element 1073 is approximately half the wavelength of the electromagnetic wave in the 920 MHz band, that is, approximately 16 cm, in order to transmit the electromagnetic wave in the 920 MHz band. The antenna element 1073 is inclined at a maximum inclination angle in the housing 107. In the example illustrated in FIG. 8, since a length of the housing 107 in the lateral direction is 32.6 mm and the length of the antenna element 1073 is approximately 16 cm, the antenna element 1073 is inclined by approximately 10 degrees with respect to the longitudinal direction of the housing 107, for example. When the antenna element 1073 is made of metal and the housing 107 is made of metal, care must be taken to prevent the antenna element 1073 from coming into contact with an inner wall of the housing 107.

### (Transmitter Group 1)

FIGs. 8 and 9 illustrate a transmitter 100-1. There is a transmitter 100-2 paired with the transmitter 100-1. The antenna element 1073 of the transmitter 100-1 and the antenna element 1073 of the transmitter 100-2 are desirably formed of the same material.

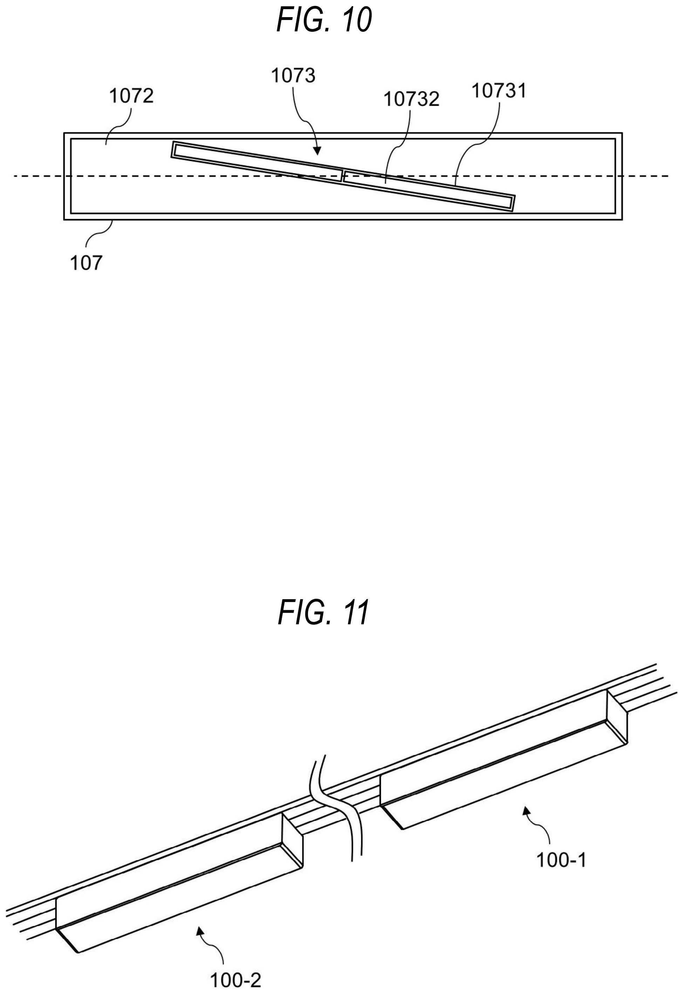

FIG. 10 is a schematic diagram of the housing 107 of the transmitter 100-2 when viewed from the lid 106 side. As illustrated in FIG. 10, the antenna element 1073 is formed on a bottom portion of the housing 107. In the transmitter 100-2, the antenna element 1073 is inclined at a predetermined angle in the horizontal direction with respect to the longitudinal direction of the housing 107. An inclination direction of the antenna element 1073 in the transmitter 100-2 is a direction opposite to an inclination direction of the antenna element 1073 in the transmitter 100-1.

FIG. 11 is a schematic diagram illustrating the transmitter 100-1 and the transmitter 100-2 when attached to a duct rail. The transmitter 100-1 and the transmitter 100-2 are alternately attached to the duct rail, for example. It should be noted that the transmitter 100-1 and the transmitter 100-2 do not necessarily have to be attached alternately. The transmitter 100-1 and the transmitter 100-2 can be installed in sets of two or three units each, or a larger number of either the transmitter 100-1 or the transmitter 100-2 may be installed. That is, the transmitter 100-1 and the transmitter 100-2 are attached to the duct rail in a mixed manner. Since the transmitter 100-1 and the transmitter 100-2 are attached to the duct rail, electromagnetic waves having different polarization planes are radiated.

### (Configuration Example 2 of Antenna Element)

In Configuration Example 1, the case where the antenna element 1073 has a linear shape has been described as an example. In Configuration Example 2, a case where the antenna element is bent will be described as an example. An antenna element 1074 is housed inside the housing 107. The antenna element 1074 is, for example, a linearly polarized antenna. The antenna element 1074 is implemented by, for example, a dipole antenna. Since the transmitter 100 is configured to radiate the electromagnetic wave in the 920 MHz band, a length of the antenna element 1074 is a length corresponding to a wavelength of the electromagnetic wave in the 920 MHz band.

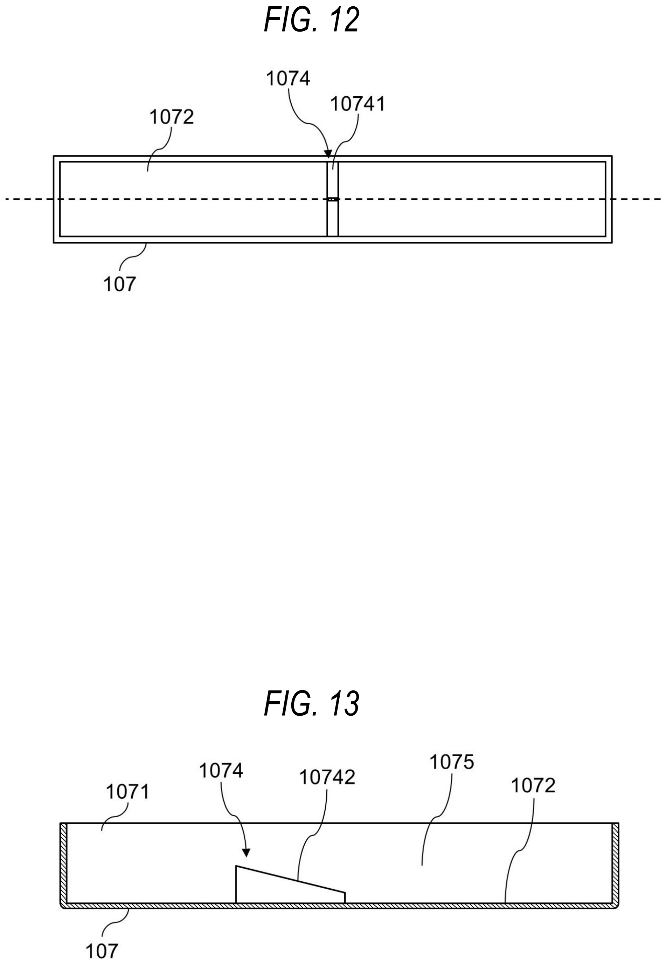

FIG. 12 is a schematic diagram of the housing 107 when viewed from the lid 106 side.

FIG. 13 is a cross-sectional view of the housing 107 taken along a broken line illustrated in FIG. 12.

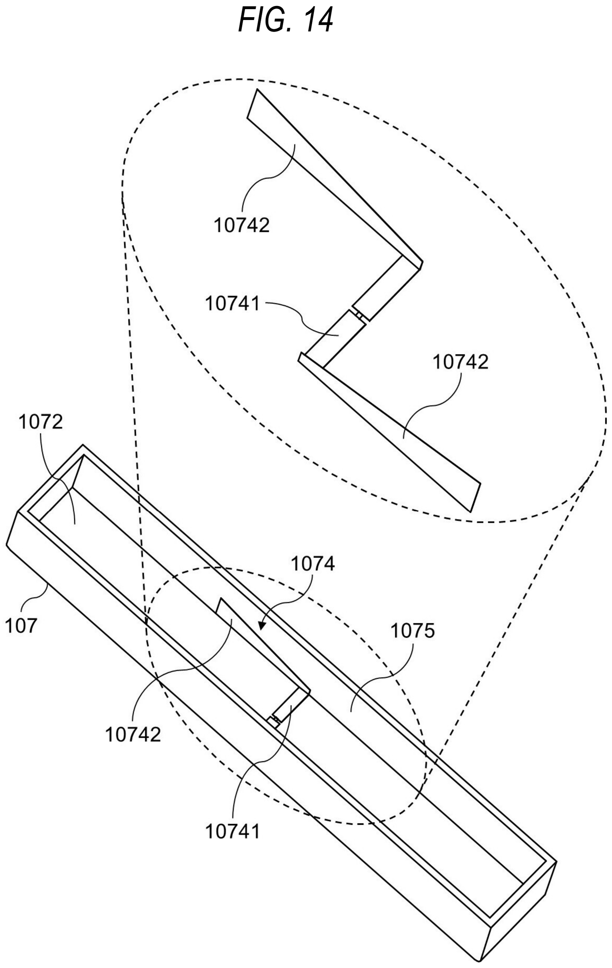

FIG. 14 is a schematic diagram of the housing 107 when viewed obliquely from the lid 106 side.

As illustrated in FIGs. 12 to 14, the antenna element 1074 is formed on the bottom portion 1072 and a wall portion 1075 of housing 107. As illustrated in FIGs. 12 to 14, the antenna element 1074 includes a first element portion 10741 and a second element portion 10742.

The first element portion 10741 is a portion formed on the bottom portion 1072. The first element portion 10741 has a feed point at the center thereof, and two conductive wires extend from the feed point in opposite directions. In the example illustrated in FIGs. 12 to 14, the first element portion 10741 is formed along the lateral direction of the housing 107, for example. That is, for example, the first element portion 10741 is formed along a direction perpendicular to the longitudinal direction of the housing 107. The first element portion 10741 may not be formed along the lateral direction. For example, the first element portion 10741 may be inclined by a predetermined angle with respect to the lateral direction. For example, the first element portion 10741 may be inclined in a counterclockwise direction in FIG. 12.

FIGs. 12 to 14 illustrate a case where the first element portion 10741 is formed of a metal foil. However, the configuration of the first element portion 10741 is not limited thereto. The first element portion 10741 may be a metal rod, a metal plate, or a metal foil formed on a substrate. The substrate is not limited to a printed circuit board, and may be a flexible printed circuit. When the first element portion 10741 is mounted using a flexible printed circuit, the first element portion 10741 may have a curved shape instead of a linear shape.

The second element portion 10742 is a portion formed on each of the opposing wall portions 1075. The second element portion 10742 is formed in the longitudinal direction of the housing 107 starting from a portion where the first element portion 10741 and the wall portion 1075 are in contact with each other. The opposing second element portions 10742 are formed in opposite directions. The second element portion 10742 may be a metal rod, a metal plate, or a metal foil formed on a substrate. The substrate is not limited to a printed circuit board, and may be a flexible printed circuit.

The second element portion 10742 has a width that increases toward end of the second element portion 10742 in the longitudinal direction of the housing 107. By increasing a width of an end of the second element portion 10742, a frequency band can be broadened, and a length from a contact portion between the first element portion 10741 and the wall portion 1075 to the end can be reduced. That is, the length from the contact portion between the first element portion 10741 and the wall portion 1075 to the end becomes smaller when the width is increased compared to when the width is not increased. That is, by increasing the width of the end of the second element portion 10742, a length from an end of one second element portion 10742 to an end of the other second element portion 10742 is smaller than half the wavelength of the electromagnetic wave to be transmitted. Specifically, the length from the end of one second element portion 10742 to the end of the other second element portion 10742 is smaller than 160 mm. In addition, by reducing the length, an angle between a straight line passing through the end of one second element portion 10742 and the end of the other second element portion 10742 and the longitudinal direction of the transmitter 100 increases, resulting in a greater inclination of a polarization direction.

The width of the end of the second element portion 10742 is not necessarily increased. The second element portion 10742 may be formed into a shape that can be expected to have the same effect as widening the width. For example, the second element portion 10742 may have a meander shape. The width of the second element portion 10742 may be uniform if it is not desired to broaden the frequency band or increase the inclination of the polarization direction.

### (Transmitter Group 2)

FIGs. 12 to 14 illustrate a transmitter 100-3. There is a transmitter 100-4 paired with the transmitter 100-3. The antenna element 1074 of the transmitter 100-3 and the antenna element 1074 of the transmitter 100-4 are desirably formed of the same material.

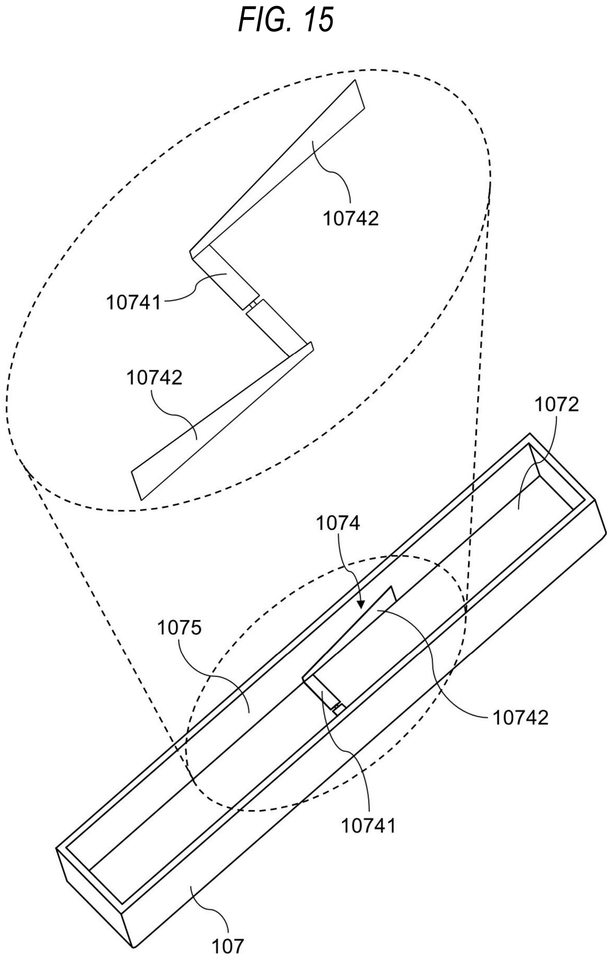

FIG. 15 is a schematic diagram of the housing 107 of the transmitter 100-4 when viewed obliquely from the lid 106 side. As illustrated in FIG. 15, the antenna element 1074 is formed on a bottom portion of the housing 107. In the transmitter 100-4, the antenna element 1074 includes a first element portion 10741 and a second element portion 10742. The first element portion 10741 is formed along the lateral direction of the housing 107, for example. For example, the first element portion 10741 may be inclined by a predetermined angle with respect to the lateral direction. For example, the first element portion 10741 may be inclined in a direction opposite to a direction of the first element portion 10741 of the transmitter 100-3.

The second element portion 10742 is formed in the longitudinal direction of the housing 107 starting from a portion where the first element portion 10741 and the wall portion 1075 are in contact with each other. The opposing second element portions 10742 are formed in opposite directions. A direction in which the second element portion 10742 is formed in the transmitter 100-3 is opposite to a direction in which the second element portion 10742 is formed in the transmitter 100-4.

The transmitter 100-3 and the transmitter 100-4 are attached to a duct rail, for example, like the transmitter 100-1 and the transmitter 100-2 illustrated in FIG. 11. The transmitter 100-3 and the transmitter 100-4 are alternately attached to the duct rail, for example. It should be noted that the transmitter 100-3 and the transmitter 100-4 do not necessarily have to be attached alternately. The transmitter 100-3 and the transmitter 100-4 can be installed in sets of two or three units each, or a larger number of either the transmitter 100-3 or the transmitter 100-4 may be installed. That is, the transmitter 100-3 and the transmitter 100-4 are attached to the duct rail in a mixed manner. Since the transmitter 100-3 and the transmitter 100-4 are attached to the duct rail, electromagnetic waves having different polarization planes are radiated.

### <2 Simulation Result>

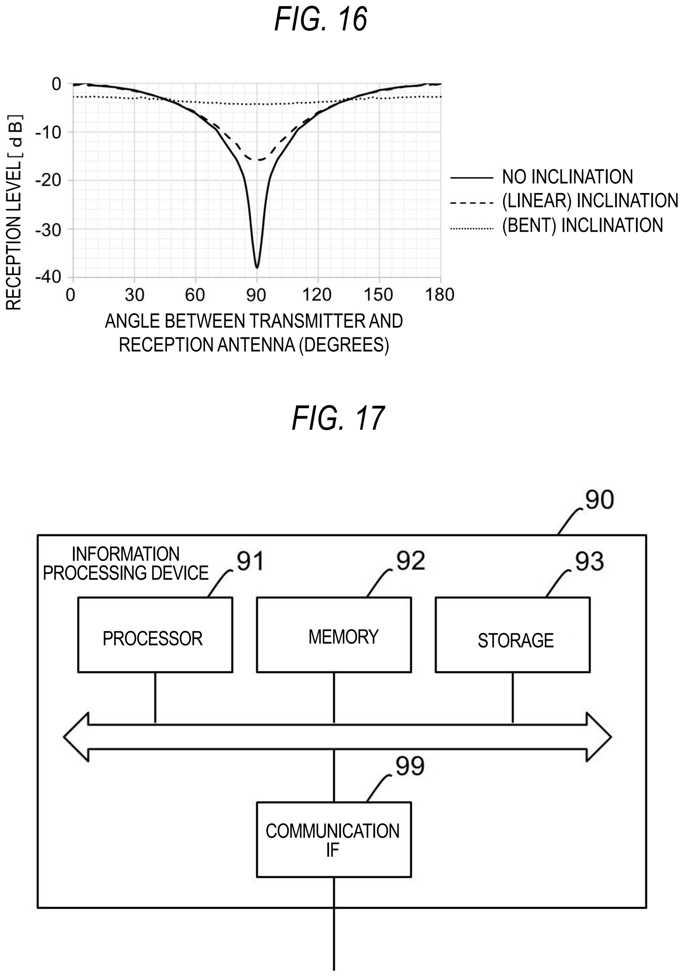

FIG. 16 illustrates a simulation result of a reception level of a signal received by a reception antenna when a radio wave is transmitted while changing an angle of an antenna element housed in a transmitter. The simulation conditions are as follows.

Two transmitters each including a linearly polarized antenna element are arranged side by side with transmitter directions thereof aligned. Specifically, for example, as illustrated in FIG. 11, the transmitters are arranged side by side in the extension directions of the transmitter. The transmitter has three patterns of antenna element inclination: no inclination, linear inclination (10 degrees), and bent inclination. The "no inclination" represents a configuration in which two transmitters in which the extension direction of the transmitter coincides with the extension direction of the antenna element are arranged. The "linear inclination (10 degrees)" represents a configuration in which the transmitter including the antenna element 1073 illustrated in FIGs. 8 and 9 and the transmitter including the antenna element 1073 illustrated in FIG. 10 are arranged. The "bent inclination" represents a configuration in which the transmitter including the antenna element 1074 illustrated in FIGs. 12 to 14 and the transmitter including the antenna element 1074 illustrated in FIG. 15 are arranged. A linearly polarized reception antenna (dipole antenna) is installed at a point at the same distance from two transmitters.

Radio waves are transmitted from two transmitters and received by the reception antenna. A change in the reception level when the direction of the reception antenna is inclined from a state parallel to the housing of the transmitter is calculated. The reception level is normalized by a maximum value under the condition of "no inclination" of the antenna element.

As illustrated in FIG. 16, in the transmitter in which the antenna element is in the "no inclination" pattern, the reception level decreases as an angle between the transmitter and the reception antenna approaches 90 degrees. This is because a polarization plane of the transmission antenna and a polarization plane of the reception antenna approach orthogonal to each other as the angle between the transmitter and the reception antenna approaches 90 degrees.

On the other hand, when the antenna element is inclined (linear), even if the angle between the transmitter and the reception antenna approaches 90 degrees, a decrease in the reception level is prevented. This is because two types of radio waves having different polarization planes are generated by inclining the extension direction of the antenna element by ± 10 degrees with respect to the extension direction of the transmitter.

Further, when the antenna element is inclined (bent), even if the angle between the transmitter and the reception antenna approaches 90 degrees, the decrease in the reception level is further prevented. This is because two types of radio waves having largely different polarization planes are generated by inclining and bending the extension direction of the antenna element with respect to the extension direction of the transmitter.

As described above, the transmitter 100 includes the housing 107 having a longitudinal direction and a lateral direction and having a width in the lateral direction that is substantially the same as a width of the duct rail. The transmitter 100 includes an attachment portion for attaching the housing to the duct rail such that the extension direction of the duct rail substantially coincides with the longitudinal direction. The transmitter 100 includes the antenna element 1073 housed in the housing 107. Accordingly, the transmitter 100 that transmits a radio wave for WPT is installed on the duct rail without causing a sense of discomfort. Therefore, it is possible to prevent the transmitter 100 from spoiling an appearance in a WPT-compatible environment.

Therefore, according to the transmitter 100 of the present embodiment, it is possible to provide a technique for realizing wireless power transfer indoors.

In the above embodiment, the antenna element 1073 is a linearly polarized antenna that radiates an electromagnetic wave in the 920 MHz band. Accordingly, the antenna element 1073 can radiate a feed signal in the 920 MHz band with an electromagnetic wave in a predetermined polarization direction.

In the above embodiment, the antenna element 1073 is housed while being inclined by a predetermined angle in the horizontal direction with respect to the longitudinal direction of the housing 107. Accordingly, it is possible to incline the polarization direction of the electromagnetic wave radiated from the transmitter 100.

Further, in the above embodiment, a central portion (first element portion 10741) of the antenna element 1074 is inclined in the horizontal direction by a predetermined angle (90 degrees in the example illustrated in FIG. 14) with respect to the longitudinal direction of the housing 107, and both ends (second element portions 10742) of the antenna element 1074 are formed in opposite directions along the inner wall 1075 extending in the longitudinal direction of the housing 107 and housed in the housing 107. Accordingly, the polarization direction can be inclined more significantly than the transmitter 100 in which the antenna element 1073 is housed.

In the above embodiment, both ends of the second element portion 10742 of the antenna element 1074 formed along the inner wall 1075 become wider in a width when extending. Since the antenna element 1074 is bent by the first element portion 10741 and the second element portion 10742, the antenna element 1074 has a narrower bandwidth, but the bandwidth can be prevented from narrowing by forming both ends of the second element portion 10742 to be wide.

In the above embodiment, the antenna element 1074 is shorter than half the wavelength of the electromagnetic wave to be transmitted. Accordingly, it is possible to make a size of the antenna element 1074 more compact.

In the above embodiment, the PCB 1061 (metal plate) is disposed between the attachment portion and the antenna elements 1073 and 1074. Accordingly, electromagnetic waves radiated from the antenna elements 1073 and 1074 are reflected by the PCB 1061 (metal plate). Therefore, an intensity of the electromagnetic wave radiated into the space is improved. The PCB 1061 has a size equal to or larger than sizes of the antenna elements 1073 and 1074. Accordingly, a reflection efficiency of the PCB 1061 is improved. Since the PCB 1061 is disposed between the attachment portion and the antenna elements 1073 and 1074, the PCB 1061 does not block the electromagnetic waves radiated from the antenna elements 1073 and 1074 into the space.

In the above embodiment, the transmitter group includes the transmitter 100-1 and the transmitter 100-2. The transmitter group includes the transmitter 100-3 and the transmitter 100-4. Accordingly, since a polarization plane of a radio wave transmitted from the transmitter 100-1 and a polarization plane of a radio wave transmitted from the transmitter 100-2 are different from each other, it is possible to reduce the need to install the receiver 200 while considering the polarization plane. That is, a degree of freedom in a placement orientation of the receiver 200 is improved.

In the above embodiment, the transmitter 100-1 and the transmitter 100-2 are attached to the duct rail in a mixed manner. The transmitter 100-3 and the transmitter 100-4 are attached to the duct rail in a mixed manner. Accordingly, the electromagnetic waves in a plurality of polarization directions are radiated from the transmitter 100 attached to the duct rail, and the reception environment is improved.

### <Modification>

In the above embodiment, the case where the transmitter 100 is attached to the duct rail has been described as an example. However, the transmitter 100 may not be attached to the duct rail. For example, the transmitter 100 may be embedded in a ceiling. In this case, for example, the attachment portion is unnecessary.

In the above embodiment, the case where the transmitter 100-1 and the transmitter 100-2 are paired, and the transmitter 100-3 and the transmitter 100-4 are paired has been described. However, the transmitter group is not limited to these pairs. The transmitter group may include the transmitter 100-1 and the transmitter 100-4, or may include the transmitter 100-2 and the transmitter 100-3. The transmitter group is not limited to two types of transmitters, and may include three or more types of transmitters. The transmitter group may include a transmitter in which the angle of the antenna element is not inclined with respect to the longitudinal direction of the transmitter.

In the above embodiment, an interior of the housing 107 is not mentioned except for the antenna elements 1073 and 1074. The interior of the housing 107 may be a space or may be filled with a predetermined dielectric material.

### <3 Basic Hardware Configuration of Computer>

FIG. 17 is a block diagram illustrating a basic hardware configuration of a computer 90. The computer 90 includes at least a processor 91, a main storage device 92, an auxiliary storage device 93, and a communication interface 99 (IF). These are electrically connected to each other by a bus.

The processor 91 is hardware for executing an instruction set written in a program. The processor 91 includes an arithmetic device, a register, a peripheral circuit, and the like.

The main storage device 92 temporarily stores a program, data processed by the program, and the like. For example, the main storage device 92 is a volatile memory such as a dynamic random access memory (DRAM).

The auxiliary storage device 93 is a storage device for storing data and programs. Examples thereof include a flash memory, a hard disc drive (HDD), a magneto-optical disk, a CD-ROM, a DVD-ROM, and a semiconductor memory.

The communication IF 99 is an interface for inputting and outputting a signal for communicating with another computer via a network using a wired or wireless communication standard.

The network includes the Internet, LANs, various mobile communication systems constructed using wireless base stations, and the like. For example, the network includes a 3G, 4G, or 5G mobile communication system, long term evolution (LTE), and a wireless network (for example, Wi-Fi (registered trademark)) that can be connected to the Internet via a designated access point. In the case of wireless connection, examples of a communication protocol include Z-Wave (registered trademark), ZigBee (registered trademark), and Bluetooth (registered trademark). In the case of wired connection, the network includes a network directly connected by a universal serial bus (USB) cable or the like.

All or some of hardware configurations may be distributed to a plurality of computers 90 and connected to each other via a network to virtually implement the computers 90. As described above, the computer 90 is a concept including not only the computer 90 housed in a single housing or case but also a virtualized computer system.

### <Basic Functional Configuration of Computer 90>

A functional configuration of a computer implemented by the basic hardware configuration of the computer 90 illustrated in FIG. 17 will be described. The computer includes at least functional units of a control unit, a storage unit, and a communication unit.

The functional units included in the computer 90 can also be implemented by distributing all or some of the functional units to a plurality of computers 90 connected to each other via a network. The computer 90 is a concept including not only a single computer 90 but also a virtualized computer system.

The control unit is implemented by the processor 91 reading various programs stored in the auxiliary storage device 93, expanding the programs in the main storage device 92, and executing processing according to the programs. The control unit can implement a functional unit that performs various types of information processing according to the type of the program. Accordingly, the computer is implemented as an information processing device that performs information processing.

The storage unit is implemented by the main storage device 92 and the auxiliary storage device 93. The storage unit stores data, various programs, and various databases. The processor 91 can secure a storage area corresponding to the storage unit in the main storage device 92 or the auxiliary storage device 93 according to a program. The control unit can cause the processor 91 to execute addition, update, and deletion processing of data stored in the storage unit according to various programs.

The database refers to a relational database and manages a data set called a table in a tabular format structurally defined by rows and columns in association with each other. In the database, a table is called a table, a column of the table is called a column, and a row of the table is called a record. In the relational database, a relationship between tables can be set and associated.

In general, a column serving as a key for uniquely specifying a record is set in each table, but setting of the key for the column is not essential. The control unit can cause the processor 91 to execute addition, deletion, and update of a record in a specific table stored in the storage unit according to various programs.

The communication unit is implemented by the communication IF 99. The communication unit realizes a function of communicating with another computer 90 via a network. The communication unit can receive information transmitted from another computer 90 and input the information to the control unit. The control unit can cause the processor 91 to execute information processing on the received information according to various programs. The communication unit can transmit the information output from the control unit to another computer 90.

Although some embodiments of the present disclosure have been described, these embodiments can be implemented in various other forms, and various omissions, substitutions, and modifications may be made without departing from the spirit of the invention. These embodiments and equivalents thereof are intended to cover such forms or modifications as would fall within the spirit and scope of the invention.

### <Clauses>

The matters described in the above embodiments will be appended below.

### (Clause 1)

A transmitter including:
a housing having a longitudinal direction and a lateral direction, a width of the housing in the lateral direction being substantially the same as a width of a duct rail;
an attachment portion for attaching the housing to the duct rail such that an extension direction of the duct rail substantially coincides with the longitudinal direction of the housing; and
an antenna element housed in the housing.

### (Clause 2)

The transmitter according to (Clause 1), in which
the antenna element is a linearly polarized antenna configured to radiate an electromagnetic wave in a 920 MHz band.

### (Clause 3)

The transmitter according to (Clause 1), in which
the antenna element is housed in the housing in a state where the antenna element is inclined by a predetermined angle in a horizontal direction with respect to the longitudinal direction of the housing.

### (Clause 4)

The transmitter according to (Clause 1), in which
the antenna element is housed in the housing in a state where a central portion of the antenna element is inclined in a horizontal direction by a predetermined angle with respect to the longitudinal direction of the housing, and where both ends of the antenna element are formed in opposite directions along an inner wall extending in the longitudinal direction of the housing.

### (Clause 5)

The transmitter according to (Clause 4), in which
the both ends of the antenna element formed along the inner wall has a width that increases toward the both ends along the inner wall.

### (Clause 6)

The transmitter according to (Clause 5), in which
a length of the antenna element is shorter than half of a wavelength of an electromagnetic wave that the antenna element is configured to transmit.

### (Clause 7)

The transmitter according to any one of (Clause 1) to (Clause 6), in which
a metal plate is disposed between the attachment portion and the antenna element.

### (Clause 8)

A transmitter group including:
a first transmitter; and
a second transmitter, in which
the first transmitter houses an antenna element in a housing having a longitudinal direction in a state where the antenna element is inclined by a predetermined angle in a horizontal direction with respect to the longitudinal direction of the housing, a width of the housing in a lateral direction being substantially the same as a width of a duct rail, and
the second transmitter houses an antenna element in a housing having a longitudinal direction in a state where the antenna element is inclined by a predetermined angle in a direction, which is opposite to a direction of the antenna element of the first transmitter is inclined, in a horizontal direction with respect to the longitudinal direction of the housing, a width of the housing in a lateral direction is substantially the same as the width of the duct rail.

### (Clause 9)

The transmitter group according to (Clause 8), in which
a central portion of the antenna element of the first transmitter is inclined in the horizontal direction by a predetermined angle with respect to the longitudinal direction of the housing, and
both ends of the antenna element of the first transmitter are formed in opposite directions along an inner wall extending in the longitudinal direction of the housing.

### (Clause 10)

The transmitter group according to (Clause 8), in which
a central portion of the antenna element of the second transmitter is inclined in the horizontal direction by a predetermined angle with respect to the longitudinal direction of the housing,
both ends of the antenna element of the second transmitter are formed in opposite directions along an inner wall extending in the longitudinal direction of the housing, and
a direction in which the central portion is inclined is opposite to a direction in which the antenna element of the first transmitter is inclined.

### (Clause 11)

The transmitter group according to (Clause 8), in which
a central portion of the antenna element of the first transmitter is inclined in the horizontal direction by a predetermined angle with respect to the longitudinal direction of the housing, and both ends of the antenna element of the first transmitter are formed in opposite directions along an inner wall extending in the longitudinal direction of the housing, and
a central portion of the antenna element of the second transmitter is inclined in the horizontal direction by a predetermined angle with respect to the longitudinal direction of the housing, both ends of the antenna element of the second transmitter are formed in opposite directions along an inner wall extending in the longitudinal direction of the housing, and a direction in which the both ends of the antenna element of the second transmitter extend is different from a direction in which the both ends of the antenna element of the first transmitter extend.

### (Clause 12)

The transmitter group according to any one of (Clause 8) to (Clause 11), in which
the first transmitter and the second transmitter are attached to the duct rail in a mixed manner.

### (Clause 13)

A system including:
a first transmitter; and
a second transmitter, in which
the first transmitter houses an antenna element in a housing having a longitudinal direction in a state where the antenna element being inclined by a predetermined angle in a horizontal direction with respect to the longitudinal direction of the housing, a width of the housing in a lateral direction being substantially the same as a width of a duct rail, and
the second transmitter houses an antenna element in a housing having a longitudinal direction in a state where the antenna element is inclined by a predetermined angle in a direction opposite to a direction of the antenna element of the first transmitter in a horizontal direction with respect to the longitudinal direction of the housing, a width of the housing in a lateral direction being substantially the same as the width of the duct rail.

### (Clause 14)

A transmitter including:
a housing having a longitudinal direction and a lateral direction, a width of the housing in the lateral direction being substantially the same as a width of a duct rail;
an attachment portion for attaching the housing to the duct rail such that an extension direction of the duct rail substantially coincides with the longitudinal direction of the housing; and
an antenna element housed in the housing,
wherein the antenna element is housed in the housing in a state where the antenna element is inclined in a horizontal direction by a substantially maximum angle at which the antenna element is able to be inclined in the housing with respect to the longitudinal direction of the housing.

### REFERENCE SIGNS LIST

1: WPT system
100: transmitter
101: oscillator
102: transmission antenna
103: microcomputer
104: data transceiver
105: data transceiver antenna
200: receiver
201: reception antenna
202: rectifier
203: power management unit
204: battery
205: microcomputer
206: data transceiver
207: data transceiver antenna
300: first information processing device
400: second information processing device

## Claims

1. A transmitter comprising:
a housing having a longitudinal direction and a lateral direction, a width of the housing in the lateral direction being substantially the same as a width of a duct rail;
an attachment portion for attaching the housing to the duct rail such that an extension direction of the duct rail substantially coincides with the longitudinal direction of the housing; and
an antenna element housed in the housing.

2. The transmitter according to claim 1,
wherein the antenna element is a linearly polarized antenna configured to radiate an electromagnetic wave in a 920 MHz band.

3. The transmitter according to claim 1,
wherein the antenna element is housed in the housing in a state where the antenna element is inclined by a predetermined angle in a horizontal direction with respect to the longitudinal direction of the housing.

4. The transmitter according to claim 1,
wherein the antenna element is housed in the housing in a state where a central portion of the antenna element is inclined in a horizontal direction by a predetermined angle with respect to the longitudinal direction of the housing, and where both ends of the antenna element are formed in opposite directions along an inner wall extending in the longitudinal direction of the housing.

5. The transmitter according to claim 4,
wherein the both ends of the antenna element formed along the inner wall has a width that increases toward the both ends along the inner wall.

6. The transmitter according to claim 5,
wherein a length of the antenna element is shorter than half of a wavelength of an electromagnetic wave that the antenna element is configured to transmit.

7. The transmitter according to any one of claims 1 to 6,
wherein a metal plate is disposed between the attachment portion and the antenna element.

8. A transmitter group comprising:
a first transmitter; and
a second transmitter,
wherein the first transmitter houses an antenna element in a housing having a longitudinal direction in a state where the antenna element is inclined by a predetermined angle in a horizontal direction with respect to the longitudinal direction of the housing, a width of the housing in a lateral direction being substantially the same as a width of a duct rail, and
the second transmitter houses an antenna element in a housing having a longitudinal direction in a state where the antenna element is inclined by a predetermined angle in a direction, which is opposite to a direction of the antenna element of the first transmitter is inclined, in a horizontal direction with respect to the longitudinal direction of the housing, a width of the housing in a lateral direction is substantially the same as a width of the duct rail.

9. The transmitter group according to claim 8,
wherein a central portion of the antenna element of the first transmitter is inclined in the horizontal direction by a predetermined angle with respect to the longitudinal direction of the housing, and
both ends of the antenna element of the first transmitter are formed in opposite directions along an inner wall extending in the longitudinal direction of the housing.

10. The transmitter group according to claim 8,
wherein a central portion of the antenna element of the second transmitter is inclined in the horizontal direction by a predetermined angle with respect to the longitudinal direction of the housing,
both ends of the antenna element of the second transmitter are formed in opposite directions along an inner wall extending in the longitudinal direction of the housing, and
a direction in which the central portion is inclined is opposite to a direction in which the antenna element of the first transmitter is inclined.

11. The transmitter group according to claim 8,
wherein a central portion of the antenna element of the first transmitter is inclined in the horizontal direction by a predetermined angle with respect to the longitudinal direction of the housing, and both ends of the antenna element of the first transmitter are formed in opposite directions along an inner wall extending in the longitudinal direction of the housing, and
a central portion of the antenna element of the second transmitter is inclined in the horizontal direction by a predetermined angle with respect to the longitudinal direction of the housing, both ends of the antenna element of the second transmitter are formed in opposite directions along an inner wall extending in the longitudinal direction of the housing, and a direction in which the both ends of the antenna element of the second transmitter extend is different from a direction in which the both ends of the antenna element of the first transmitter extend.

12. The transmitter group according to any one of claims 8 to 11,
wherein the first transmitter and the second transmitter are attached to the duct rail in a mixed manner.

13. A system comprising:
a first transmitter; and
a second transmitter,
wherein the first transmitter houses an antenna element in a housing having a longitudinal direction in a state where the antenna element being inclined by a predetermined angle in a horizontal direction with respect to the longitudinal direction of the housing, a width of the housing in a lateral direction being substantially the same as a width of a duct rail, and
the second transmitter houses an antenna element in a housing having a longitudinal direction in a state where the antenna element is inclined by a predetermined angle in a direction opposite to a direction of the antenna element of the first transmitter in a horizontal direction with respect to the longitudinal direction of the housing, a width of the housing in a lateral direction being substantially the same as the width of the duct rail.

14. A transmitter comprising:
a housing having a longitudinal direction and a lateral direction, a width of the housing in the lateral direction being substantially the same as a width of a duct rail;
an attachment portion for attaching the housing to the duct rail such that an extension direction of the duct rail substantially coincides with the longitudinal direction of the housing; and
an antenna element housed in the housing,
wherein the antenna element is housed in the housing in a state where the antenna element is inclined in a horizontal direction by a substantially maximum angle at which the antenna element is able to be inclined in the housing with respect to the longitudinal direction of the housing.
